# EUROPEAN PATENT SPECIFICATION

(11) **EP 3 496 842 B1**
(45) Date of publication and mention of the grant of the patent: **27.04.2022**
(21) Application number: 17844127.5
(22) Date of filing: 11.08.2017
(51) Int. Cl.: B01L 7/00, B01L 9/06, B01D 63/08, B01D 71/50, G02B 21/30, G01N 1/40

(54) **HEATING DEVICE FOR A FILTRATION ASSEMBLY**
HEIZVORRICHTUNG FÜR EINE FILTRATIONSANORDNUNG
DISPOSITIF DE CHAUFFAGE POUR ENSEMBLE DE FILTRATION

(30) Priority: 11.08.2016 US 201662373623 P
(43) Date of publication of application: 19.06.2019
(73) Proprietor: Siemens Healthcare Diagnostics Inc., Tarrytown, NY 10591 (US)
(72) Inventor: TUMA, Claus, 91207 Lauf an der Pegnitz (DE); ZIEGLER, Heiko, 90766 Fürth (DE)
(74) Representative: Schweitzer, Klaus
(86) International application number: PCT/US2017/046563
(87) International publication number: WO 2018/038943

(56) References cited:
- EP-A1- 0 826 420
- EP-A1- 2 478 962
- JP-A- H03 131 325
- JP-A- H10 239 325
- US-A- 3 904 781
- US-A- 5 343 018
- US-A- 5 795 547
- US-A1- 2007 010 007
- US-A1- 2010 317 726
- US-A1- 2012 315 664
- Environmental Express: "F1500 - Disposable Filter Funnels, Unassembled, 50pk", , 8 May 2016 (2016-05-08), XP055616229, Charleston, South Carolina 29492, USA Retrieved from the Internet: URL:https://web.archive.org/web/2016050822 5431/http://www.envexp.com/products/5-Radi ochemistry/RAD-Radiochemistry_Testing/ALPH A-Filters_for_Alpha_Spectroscopy/F1500-Dis posable_Filter_Funnels,_Unassembled,_50pk [retrieved on 2019-08-28]
- Pall Life Sciences: "25 mm Polysulfone Filter Funnels", , 19 April 2014 (2014-04-19), XP055616159, Port Washington, NY 11050, USA Retrieved from the Internet: URL:https://laboratory.pall.com/content/da m/pall/laboratory/literature-library/non-g ated/25mm_Polysulfone_Filter_Funnels_82071 H.pdf [retrieved on 2019-08-28]
- 'BIOHEATER CLOSED FLUID CELL' ASYLUM RESEARCH, [Online] 21 June 2016, XP055468572 Retrieved from the Internet: <URL:https://web.archive.org/web/2016062114 2122/https://www.asylumresearch.com/Product s/BioHeater/BioHeater.shtml> [retrieved on 2017-09-26]

## Description

This application claims the priority of U.S. Provisional Application No. 62/373,623, filed August 11, 2016.

### FIELD

The present invention generally relates to a heating device for a filtration assembly, wherein the filtration assembly comprises at least a carrier, a filter membrane and a supporting body. The filtration assembly preferably is the one described in US 2012/0315664.

### BACKGROUND

Microscopy is a widely used method in analysis.

In particular in the field of "life sciences", it is an indispensable tool in order, for example, to characterize tissue and cells. Object carriers have become the established "interface" between the medium to be examined and the imaging components of a microscope. These are glass plates measuring 26×76 mm (ISO 8037-1) with a thickness of from 1 to 1.5 mm. The objects are, for example, applied to the object carrier in a thin layer and can be covered with a cover glass, which, as a rule, measures 18×18 mm and is 0.16 mm thick. Objects are, for example, sections of tissue surrounded by a film of liquid.

Filtration is also a widely used technique, in particular for separating solids of different sizes from each other and/or from liquids. E.g. simple polypropylene laboratory filter funnels for standard 25mm filters and with associated caps and supports are described in "Environmental Express: F1500 - Disposable Filter Funnels, Unassembled, 50pk", 8 May 2016, XP055616229. When microscopy and filtration are combined, following the filtration process, the filtration residue can be examined microscopically.

To enable this process to be used routinely and inexpensively for medical diagnosis, for example during the examination of tumor cells filtered from a blood sample (see e.g. US-A-2012/021435 or US-A-2014/0110349), it is necessary to provide a simple and inexpensive solution, which can also be carried out by untrained personnel.

Minimization of manual process steps also results in an improved potential for standardization and the avoidance of any impairment of the quality of the results.

US-A-2012/0315664 describes an improved assembly and method for the filtration of liquids. The assembly comprises a carrier, a filter membrane and a supporting body. The supporting body is arranged and/or formed in a recess of the carrier. The filter membrane is arranged evenly and/or flat on the supporting body.

The carrier typically is an object carrier, in particular for microscopy, which is made of glass or plastic, in particular polycarbonate. The supporting body can be textured, in particular porous. The texture determines the number of support points for the filter membrane and enables filtered liquid to drain off after passing through the filter membrane. The supporting body, likewise, can be made of plastic, in particular polycarbonate, or of a ceramic. The use of an object carrier as a carrier for the filter membrane facilitates simple handling and use in standard devices.

For filtration the object carrier is placed over a lid of a container so that the filter membrane/supporting body matches with a corresponding opening in the lid such that the gap between the object carrier and the opening in the lid is air sealed. The container is connected to tubes supplying the container with a gas at operator controlled super- and sub-atmospheric pressure, thereby allowing control of the filtration process as described e.g. in US-A-2014/0110349.

Typically, the container is a replaceable part of a rack. The rack can be placed in a diagnostic robot, e.g. a pipette robot which performs automated procedures such as pipetting one or more liquids from one or more reservoirs onto the object carrier which is reversibly fixed on the container lid. The object carrier and/or the container may then be transferred to an analyzing station inside or outside the robot.

The filtration assembly as described in US-A-2012/0315664 is manually placed over the lid of the container. Once the filtration assembly has been placed onto the lid of the container the container including the filtration assembly is inserted into a rack where the container is manually attached to pressure/vacuum tubes provided by the robot. Typical robots provide the pressure and the vacuum at different but constant pressure levels - one level for the super and one level for the sub atmospheric pressure.

It has been suggested to provide for an improved container for use in a rack of a pipette robot which rack provides utilities, i.e. at least a gas, preferably air at pre-defined but adjustable pressure levels to the container and, thus, to a filtration assembly comprising a carrier, a filter membrane and a supporting body. The suggested container is designed to be used routinely and inexpensively for medical diagnosis, for example for the examination of tumor cells filtered from a blood sample.

For certain filtration processes it is desirable to heat the sample prior to, during and/or after filtration.

It was, therefore an object of the present invention to provide a heating device for a filtration assembly, wherein the filtration assembly comprises at least a carrier, a filter membrane and a supporting body. Preferably, the heating device is designed for a filtration assembly as described in US 2012/0315664. The heating device is designed to work in conjunction with a container which is used in a rack of a pipette robot which rack provides utilities, i.e. at least a gas, preferably air at pre-defined but adjustable pressure levels to the container and, thus, to the filtration assembly placed over the container.

### SUMMARY

This object is achieved with a container and a filtration assembly comprising a microscopy object carrier (1), a circular, film-type membrane (2) having a circular diameter in the region of 25 mm and a thickness in the region of 10 µm, and a supporting body (3), wherein said supporting body (3) is arranged and/or formed in a recess on the front side of the carrier (1), said filter membrane (2) lies evenly on the supporting body, said filtration assembly is configured to be placed over a top opening (14) of the container (12) such that the gap between the object carrier and the opening is air-sealed, wherein the container is configured to receive a filtrate leaving the rear side of the carrier, said container is configured to lock into a predetermined position once placed in a rack of a pipette robot, wherein the rack provides a gas at pre-defined but adjustable pressure levels to the container and, thus, to the filtration assembly placed over the container, and provides support for one or more containers, each container comprising a container body, a bottom and a top, wherein the top opening matches the size and form of the filter membrane/supporting body of the object carrier which is placed over the opening for filtration of a sample and wherein the top provides a stable support for the filtration assembly holding it in a fixed, predetermined position, characterized in that the filtration assembly further comprises a heating device comprising:
- a cylindrical ring (221) that is placed with one of its openings concentrically over the filter membrane respectively, the supporting body of the filtration assembly, the ring defining a cylindrical closed wall, having a bottom opening and a top opening
- wherein the bottom opening matches the size and form of the filter membrane and/or supporting body (2, 3) of the carrier (1) of the filtration assembly;
- a lid (225) that matches the size and form of the top opening (223) of the ring (221) and
- one or more heating elements selected from
   o a heating element (224) which is integrated into the ring,
   ∘ a heating element (224) which is arranged on the outer and/or inner surface of the wall defining the ring (221), and
   ∘ a heating element (224) arranged in or on the lid (225).

Advantageous embodiments of the device according to the invention and its use may be derived from the respective dependent claims. The features of the main claim can be combined with the features of one or more dependent claims and the features of the dependent claims can be combined with features from other dependent claims.

### BRIEF DESCRIPTION OF THE DRAWINGS

Preferred embodiments of the invention with advantageous developments according to the features of the dependent claims are explained in more detail below with reference to the figures, but without being restricted thereto.

The figures show:
FIG. 4 a perspective view of a ring with heating element
FIG. 5 a perspective view of a heating device in the form of a funnel/fixture over a filtration assembly on a container top
FIG. 6 a 3D picture of an embodiment of the rack with containers, filtration assemblies and rotational covers containing heating elements
FIG. 7 a sectional view of two containers with filtration assemblies and pivoting rotational hold-down containing heating elements

### DETAILED DESCRIPTION OF THE INVENTION

A "rack" is a standardized insert device for diagnostic robots which meets the size limitations set by the diagnostic robot, preferably by diagnostic robots from different manufacturers so that it can be used independently from the manufacturer of the given diagnostic robot. It fits the guide rail system of the inside of the robot (if present) so that it can be transferred to different preselected diagnostic stations within the robot. If necessary, the rack can be connected or is automatically connected upon insertion into the robot to utilities provided by the robot, such as electric power, digital and/or analog data input/output, fluids, gases etc.. Racks can be provided for example for analytic test tubes, well plates or even hold complete diagnostic analytical devices.

### The Filtration System

The object carrier including the filtration assembly is described in detail in US-A-2012/0315664, and comprises a carrier, a filter membrane and a supporting body. The supporting body is arranged and/or formed in a recess of the carrier. The filter membrane is arranged evenly and/or flat on the supporting body.

During filtering, the supporting body provides mechanical support for the filter membrane, thus enabling large quantities of liquid to be filtered in a reasonable time. Filter membranes, which can only be embodied as very thin, are, for example, filter membranes produced by particle bombardment from films with precisely defined through-pores or holes. Good support with the aid of the supporting body in the form of numerous, uniformly distributed support points is essential for the use of filter membranes of this kind as filters. The carrier can have a thickness in the region of 1 to 1.5 mm, a length in the region of 75 to 76 mm and a width in the region of 25 to 26 mm. The filter membrane has a thickness in the region of 10 µm, and a diameter in the region of 25 mm. These dimensions make the carriers suitable for use in the most commonly used holdings in standard devices for object carriers.

The recess in the carrier can have the same size as the supporting body. This facilitates good holding of the supporting body in the carrier. On the other hand the supporting body can be produced integrally from the carrier material. In the second case, a permanently stable assembly is achieved. The supporting body can have a circular design and the filter membrane can also have a circular design. This facilitates use in systems with circular feed pipes and circular discharge pipes for fluids. A round embodiment also facilitates microscopy, because the entire circular region can be optically resolved in the microscope's field of view.

The supporting body can comprise channels formed on a side facing the filter membrane, which are in fluidic contact with the filter membrane. These channels facilitate good drainage of the filtered liquid from the filter membrane and hence good passage of liquid to be filtered through the filter membrane.

The filter membrane can be a track etched filter membrane made of polycarbonate film and comprises holes with a diameter of micrometers, in particular 8 µm and a hole density of 1% to 80% (as the ratio of the perforated area to the overall area), in particular a hole density of 105 holes per square centimeter.

The assembly comprises a carrier (1) and a supporting body (3) arranged in a recess of the carrier (1). The carrier (1) is embodied as even in the form of an object carrier for light microscopy. In a region disposed at a distance from supporting body (3), an area can be embodied as a grip in that the surface is roughened, for example, in this region.

A circular, film-type filter membrane (2) is arranged evenly on a front side of the carrier (1) and the supporting body (3). The circular filter membrane (2) has a circular diameter ØM in the region of 25 mm and a thickness DM in the region of 10 µm. In the edge region, the filter membrane (2) is mechanically connected to the carrier, for example by welding or adhesion. The circular supporting body (3) is arranged below the filter membrane (2). The supporting body has, for example, a circular diameter ØS in the region of 23 mm and a thickness Dx corresponding to the thickness of the carrier. The filter membrane (2) lies evenly on the supporting body (3), wherein deviations from a planar contact surface between the supporting body (3) and filter membrane (2) can be, for example, maximum 100 µm. The supporting body (3) and the carrier (1) can be formed as one integral piece or the circular supporting body (3) can be arranged in a circular recess passing right through the thickness Dx of the carrier, in particular connected in a mechanically stable way to the carrier (1). In addition to circular shapes of the supporting body (3) and the recess, other shapes, for example rectangular or triangular shapes, are possible. A positive contact between the supporting body (3) and the recess of the carrier (1) is of advantage here.

Channels are formed in the surface of the supporting body (3) on a front side. In order to keep the channel density of the channels on the surface in the direction of edge region substantially constant, the number of channels increases in the direction of the edge going from the mid-point.

Drainage holes passing completely through the thickness Dx of the carrier (1) or supporting body (3) are arranged close to the edge region of the filter membrane (2) in the supporting body (3) or in the carrier (1) or in the contact region between the supporting body (3) and carrier (1). The channels end in the drainage holes. Fluid flowing through the filter membrane (2) can come through the channels and the drainage holes from the front side of the carrier (1) and arrive at the rear side of the carrier (1) and be transported away from there. Good uniform passage through filter membrane (2) and good filtering of the fluid are facilitated. In particular, a uniform pressure drop over the entire filter membrane surface is achieved.

Alternatively, if ceramic is used as the material for the supporting body (3), a porous layer can be formed on the surface of the supporting body (3), which, similarly to channels, permits uniform drainage of a fluid. If the supporting body (3) is completely made of a porous material, the drainage holes and channels can be provided by the porosity. In order to place the filtration assembly (the object carrier) with its correct surface facing up onto the container top (13) for filtration, the carrier (1) is provided with object-carrier-guiding means (21) which match with corresponding top-guiding-means on the container top (13). For example, the object-carrier-guiding-means (21) can have the form of elevations in the container top (13) and matching depressions in object carrier (1) or vice versa or pairs of an elevation and a depression in the container top (13) matching with a corresponding elevation/depression pair in the object carrier (1). The elevations/depressions can be of any form, like round, oval, square, rectangular, hexagonal or polygonal. Their size (cross-section, height/depth) is not critical but must be appropriate to withstand the mechanical stress during placement of the carrier on the top of the container and during operation. For a typical microscopy object carrier elevation/depression sizes of 0.5 to 3 mm in cross-section and 0.1 to 3 mm in height are sufficient. Preferably the elevations/depressions are of the same material as the carrier (1).

### The Container

The container's main object is to receive the filtrate leaving the rear side of the carrier (1) and to provide a stable support for the filtration assembly holding it in a fixed, predetermined position so that it can reliably be accessed by the various tools of the robot. It can in principal have any cross sectional shape, like round, oval, square, rectangular, hexagonal or even polygonal, however it seems that a round cross sectional shape (i.e. cylindrical or cone shaped) is the most economic and useful shape, which is, therefore, preferred. Likewise it can be made of nearly any material, the only restriction would be for material which could interfere with the filtrate if the filtrate is of analytical interest or is so reactive that it could destroy the container wall and, thus, contaminate the robot. Most common materials used are polyethylene, polypropylene, polyamide, polycarbonate, polystyrene and the like or glass or ceramic or metal, like stainless steel.

The container (12) for a rack of a diagnose robot comprises: a container (12) with top (13) and object carrier (1) in place. In order to provide a stable support for the filtration assembly and in order to hold it in a fixed, predetermined position the container (12) should be designed to lock into a predetermined position once placed in the rack. This can be achieved for example with a protrusion/notch system (not shown) where e.g. the protrusion is located at the rack-site and the notch on the container wall (or vice versa), so that the container only slides into its correct position when the protrusion matches the notch.

The container (12) comprises a container body comprising a sidewall or multiple sidewalls, a bottom and a top (13) wherein the container body is of round, oval, square, rectangular, hexagonal or polygonal cross sectional shape. The top (13) can be designed as an integral part of the container (12) as a unit of container body, bottom and top (13) in which case the top (13) is preferably welded to the container body, but it can also be designed as a separate part (a lid) which removably covers the container (12). The top (13) is further provided with an opening that matches the size and form of the filter membrane/supporting body (2, 3) of the object carrier (1) which is placed over the opening in the top (13) of the container (12) for filtration of a sample. The gap between the object carrier and the opening (14) in the top (13) is air sealed which can be established with an appropriate flexible ring (not shown) which is fixed on the rim of the opening or which is an integral part of top (13).

In order to lock the object carrier (1) with a predetermined surface faced up into a predetermined position on the top (13) the top (13) is provided with a top-guiding-means which matches with a corresponding object-carrier-guiding-means (21) on or in the object carrier (1).

The container (12) is equipped with an adapter which matches an outlet on the rack for a gas, preferably air, at a pre-defined, adjustable pressure level.

Preferably, the container (12) is further equipped with a removable funnel/fixture (22) which prevents an inadvertent displacement of the object carrier (1) and which can at the same time serve as a funnel-like reservoir for the to be filtered medium. The cross-section and form of the funnel/fixture (22) is preferably adapted to the cross-section and form of the supporting body (3) and filter membrane (2) in the object carrier (1). The height of the funnel/fixture (22) is not critical and should be adapted to typical volumes of the to be filtered medium. Typical useful volumes are 0.5 to 2 cm³, preferably about 0.75 to 1.5 cm³. The funnel/fixture (22) can be made of nearly any material, as long as the material does interfere with the to be filtered medium or. Most common materials used are polyethylene, polypropylene, polyamide, polycarbonate, polystyrene and the like, or metals like aluminum, titanium, iron or the like. In a more preferred embodiment the funnel/fixture (22) is attached to the top (13) via a connecting band or ribbon (23) which can be made from the same material as the funnel/fixture, and which may be an integral part of it.

In a most preferred embodiment the funnel/fixture is or comprises the heating device of the present invention.

### The Heating Device

The heating device of the present invention comprises:
- a cylindrical ring (221) defining a cylindrical closed wall, having a bottom opening and a top opening (223)
- wherein the bottom opening matches the size and form of the filter membrane and/or supporting body (2, 3) of the carrier (1) of the filtration assembly; and
- one or more heating elements (224) selected from
   o a heating element which is integrated into the ring,
   o a heating element which is arranged on the outer and/or inner surface of the wall defining the ring, and
   o a heating element arranged in or on a lid, wherein the lid matches the size and form of the top opening of the ring.

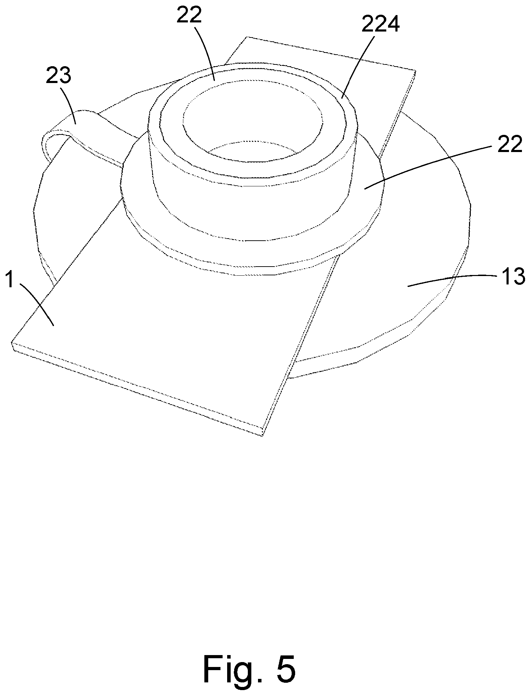

The heating device is a ring (221) that is placed with one of its openings (222 or 223) concentrically over the filter membrane (2) respectively the supporting body (3) of the filtration assembly, preferably such that the bottom opening of the ring (221) matches the size and form of the filter membrane and/or supporting body (2, 3) of the carrier (1) of the filtration assembly. At least the surface area of the filter membrane and/or supporting body (2, 3) is covered by the opening (223) of the ring (see Fig. 5). As such the ring (221) also serves as a reservoir for the sample to be filtered.

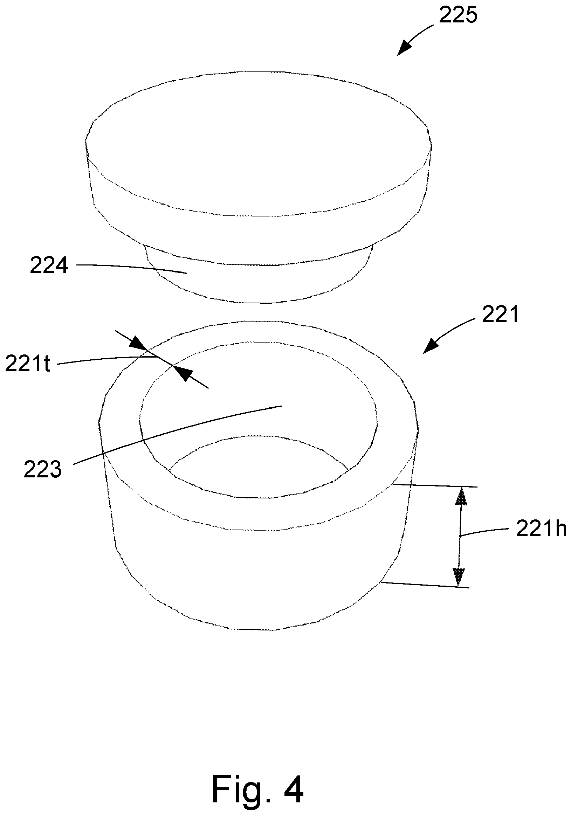

The ring (221) defines a cylindrical closed wall, having a bottom opening and a top opening (223). Thus, the form of the ring (221) is not critical but should preferably match the size and form of the filter membrane (2) and/or supporting body (3) of the carrier (1) of the filtration assembly. Accordingly, it can in principal have any cross sectional shape, like round, oval, square, rectangular, hexagonal or even polygonal, however it seems that a round cross sectional shape (i.e. cylindrical or cone shaped) is the most economic and useful shape of the ring (221), which is, therefore, preferred. Likewise it can be made of nearly any material, the only restriction would be for material which could interfere with the to be filtered medium or not withstand the temperature generated by the heating element (224) which is in contact with or in close proximity to the ring (221). Most common materials used are polyethylene, polypropylene, polyamide, polycarbonate, polystyrene and the like or glass or ceramic or metal, like aluminum, titanium or stainless steel. A metal is preferred if the heating element (224) is in contact with or close to the ring (221). The height (221h) of the ring (221) and its thickness (221 t) is also not critical and should be adapted to typical volumes of the to be filtered medium (see Fig. 4). Typical useful volumes are 0.5 to 2 cm³, preferably about 0.75 to 1.5 cm³. The height (221h) should be sufficient to hold the sample volume to be filtered and should preferably extend over the level of the sample, preferably by at least 10%, more preferably by at least 20%. The thickness (221t) should be sufficient to provide mechanical stability of the ring (221). Depending on the material used for making the ring (221) the thickness (221t) is in the range of 0.1 to 3.0 mm, preferably 0.5 to 1.5 mm.

In one embodiment of the invention the heating element is integrated in the funnel/fixture (22) described above in connection with the container (12). Thus, the heating device constitutes a combination of the funnel/fixture (22) and the heating element (224). In a preferred embodiment the funnel/fixture (22) with the integrated heating element (224) is attached to the top (13) of the container via a connecting band or ribbon (23) which can be made from the same material as the funnel/fixture, and which may be an integral part of it.

The heating element (224) for the heating device is selected from one or more of
∘ a heating element (224) which is integrated into the ring (221),
o a heating element (224) which is arranged on the outer and/or inner surface of the wall defining the ring (221), and
∘ a heating element (224) arranged in or on a lid (225), wherein the lid (225) matches the size and form of the top opening (223) of the ring.

Typically the heating element (224) is an electrical heating element where heat (infrared radiation (IR)) is generated by an electrical current flowing through a metal wire, mesh, woven or non-woven or a polymeric film having electrically conductive particles incorporated therein. Typical examples of such electrical heating elements are heating mats or pads or films like Kapton^{®} RS (DuPont, Wilmington, U.S.A.), in which electrically conductive particles are incorporated into a polymer film. These ribbon or layer-like pads or films can be - e.g. adhesively - attached to either the outside or inside surface of the ring (221); preferably on the outside. This is shown in Figs. 4 and 5.

In another embodiment the heating element (224) is integrated into the material of the ring (221). This can be done by incorporating electrically conductive particles into the nonconductive material of the ring (221) during manufacture of the ring (221).

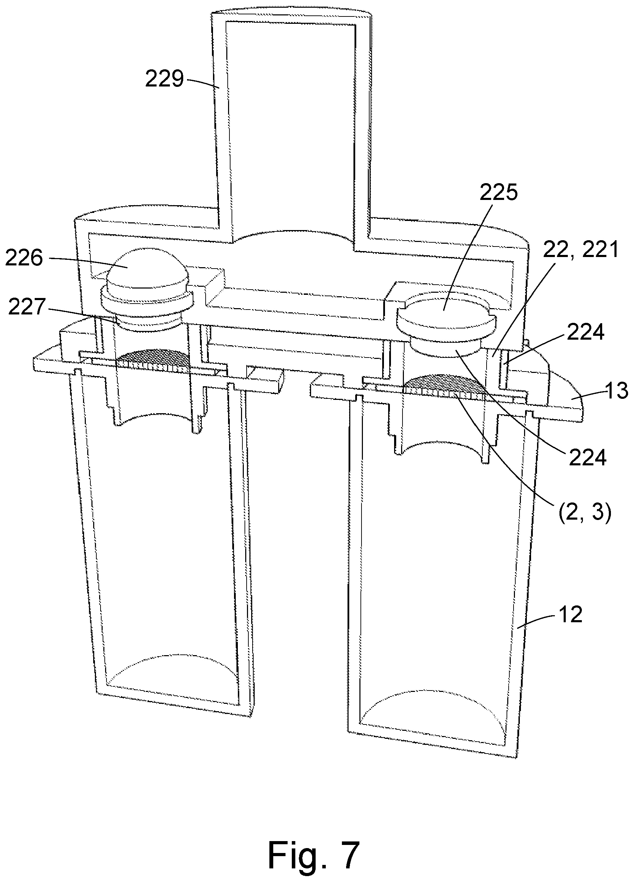

In another embodiment of the invention the heating element (224) is arranged in or on a lid (225), wherein the lid (225) preferably matches the size and form of the top opening (223) of the ring (see Fig. 4; also shown in Fig. 7 in the pivoting rotatable hold-down (229)). In this embodiment the heating element (224) is again a heating mat or pad or film as outlined above, or a IR source, like a light bulb (226), preferably a halogen bulb or micro-wave source. When a light bulb (226) like a halogen bulb is used it is preferred to apply a UV-filter (227) between the light bulb (226) and the to be filtered medium since UV-radiation may cause damage to the medium.

The heating device of the present invention provide for a contactless heating of the to be filtered medium to temperatures in the range of 30 to 120 °C or more, preferably to 50 to 100 °C, more preferably to 60 to 90 °C. The heating element (224) in the heating device is not specifically limited with respect to the upper temperature; it is the to be filtered medium which defines the temperature limit. The heating device of the present invention allows for contactless individually adapted application of heat to any pre-determined temperature for medical diagnosis.

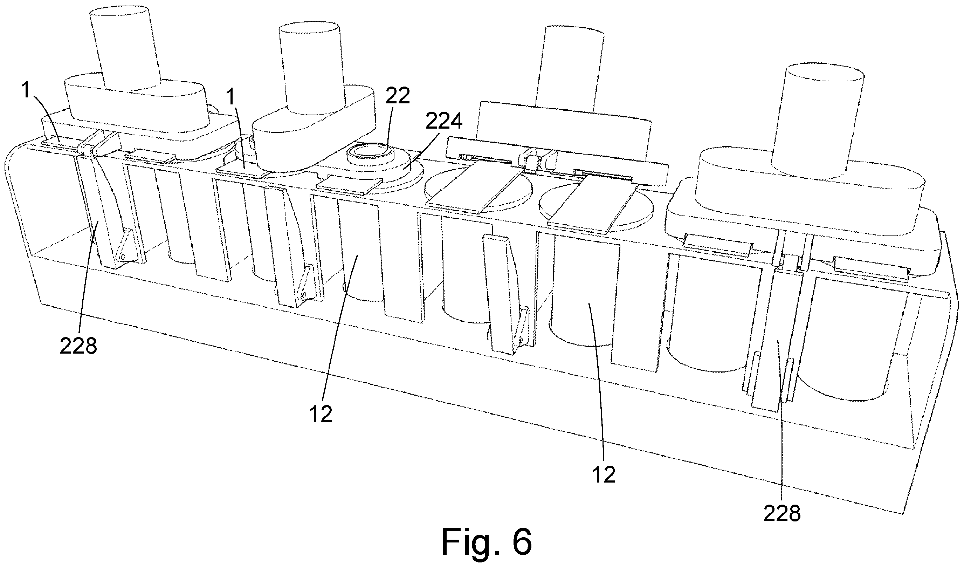

In a preferred embodiment the heating device is integrated into a pivoting hold-down adapted for a rack as show in Figs. 6 and 7. The pivoting hold-down incorporates the ring (221) so that the ring (221) is surrounded on the outside by the material of the hold-down; the top opening (223) and the bottom opening of the ring (221) are recessed, so that the sample (to be filtered medium) can be filled into the ring (221) when it is hinged down and concentrically covers and seals off the filter membrane (2) respectively the supporting body (3) of the filtration assembly. The hold-down with the incorporated ring (221) hinges on the rack so that it can reversibly cover the filter membrane (2) respectively the supporting body (3) of the filtration assembly and at the same time hold the ring (221) down on the filtration assembly. This holding down can preferably be supported by a clamp (228) which is preferably arranged on the rack opposite the hinge of the hold-down.

In a further preferred embodiment which is specifically adapted for the rack shown in Figs. 6 and 7, two of the above described hold-downs are attached to each other side-by-side so that they can reversibly cover two filtration assemblies which are arranged next to each other. This paired hold-down can then be attached to the rack via only one but also two or more hinges. It is however preferred that the holding down of the paired hold-downs is still supported by a clamp (228) for each of the two hold-downs.

In a further preferred embodiment which is specifically adapted for the rack shown in Figs. 6 and 7 and the paired hold-down described above, the paired hold-down is covered with a rotatable cover lid, resulting in a pivoting hold-down with a rotatable cover (229). The cover lid length extends over the two hold-downs such that at least both recessed openings in the hold-downs are covered when the rotatable cover lid is rotated in a position to cover the recessed openings. The axis of rotation is perpendicular to the horizontal plane formed by the hold-downs and is preferably located in the center between the two hold-downs of the paired hold-down. Preferably a knob-like handle is arranged on the cover lid to facilitate rotation of the cover lid. Two spring loaded lock-in positions may be provided in the cover lid so that the cover lid locks in a first position which closes the two recessed openings in the paired hold-down and again in a second position rotated away by 90° giving access to the two recessed openings for introducing the sample (the to be filtered medium).

In a further preferred embodiment the rotatable cover lid serves as a housing for the heating element (224) which is arranged in or on the lid (225), over opening (223) of the ring, or for the light bulb (226) and the UV-filter (227).

The heating device is preferably provided with electrical current from the rack via appropriate connectors.

### The rack

The rack - embodiments of which are shown in FIGs. 6 and 7 - provides support for one or more, preferably up to eight containers (12) and four pivoting rotatable hold-downs (229) e.g. for performing lysis and filtration of whole blood samples. The containers (12) hold the filtrates and the tops (13) are designed to hold an object carrier (1) each, wherein the object carrier (1) includes a filtration assembly (2, 3). The four pairs of containers (12) each holding a filtration assembly are covered by four pivoting rotatable hold-downs (229).

The rack provides an outlet for each container for a gas, preferably air, and an outlet with electrical power for the heating elements (224) in the heating device of the present invention.

### Use

With the above-described heating device for a filtration assembly whole blood samples can be filtered. This separation predominantly isolates circulating rare cells with some white blood cells and no red blood cells. After isolating the cells, the cells are fixed and washed and heat can be applied to the sample with the heating device according to the present invention. The filtration process can be stopped (by applying super-atmospheric pressure to the container) e.g. for bio banking slides with rare cells or can be continued with automated procedures for e.g.: molecular detection of proteins by immunocytochemistry (ICC); RNA in-situ hybridization (ISH); or cytological morphology by chromogenic dye staining (H&E). Alternatively the carriers can be used to extract cellular material for other detection methods which are not automated in the given procedure, such as PCR or FISH analysis for DNA or automated immunoassays.

The method allows cells to be fixed with formaldehyde and permeabilized with detergent to help expose intracellular antigens. The method also allows series of wash steps to wash away unbound antibody and probe, blocking steps to reduce non-specific binding and incubation steps for multiple step assays and heating steps to apply heat at different stages of the process. The methods further allow using DAPI (4',6-diamidino-2-phenylindole), a fluorescent DNA stain to stain the nuclei of the cells and the application of cover media to help preserve the fluorescent intensity of the probes.

### List of reference numbers:

- (1): carrier
- (2): filter membrane
- (3): supporting body
- (12): container
- (13): top
- (22): funnel/fixture
- (23): ribbon
- (221): ring
- (223): top opening (of ring)
- (224): heating element
- (225): lid
- (226): light bulb
- (227): UV-filter
- (228): clamp
- (229): pivoting hold-down w. rotatable cover

## Claims

1. A container and a filtration assembly comprising a microscopy object carrier (1), a circular, film-type filter membrane (2) having a circular diameter in the region of 25 mm and a thickness in the region of 10 µm, and a supporting body (3), wherein
- said supporting body (3) is arranged and/or formed in a recess on the front side of the carrier (1),
- said filter membrane (2) lies evenly on the supporting body (3),
- said filtration assembly is configured to be placed over a top opening (14) of the container (12) such that the gap between the object carrier (1) and the opening is air sealed, wherein the container (12) is configured to receive a filtrate leaving the rear side of the carrier (1),
said container (12) is configured to lock into a predetermined position once placed in a rack of a pipette robot, wherein the rack provides a gas at pre-defined but adjustable pressure levels to the container (12) and, thus, to the filtration assembly placed over the container, and provides support for one or more containers (12), each container (12) comprising a container body, a bottom and a top (13), wherein the top opening (14) matches the size and form of the filter membrane/supporting body (2,3) of the object carrier (1) which is placed over the opening (14) for filtration of a sample and wherein the top (13) provides a stable support for the filtration assembly holding it in a fixed, predetermined position,
wherein the filtration assembly further comprises a heating device comprising:
- a cylindrical ring (221) ) that is placed with one of its openings concentrically over the filter membrane (2) respectively, the supporting body (3) of the filtration assembly, the ring defining a cylindrical closed wall, having a bottom opening and a top opening (223), wherein the bottom opening matches the size and form of the filter membrane (2) and/or the supporting body (3), and
- a lid (225) that matches the size and form of the top opening (223) of the ring (221);
- one or more heating elements (224) selected from
- a heating element (224) which is integrated into the material of the ring (221),
- a heating element (224) which is arranged on the outer and/or inner surface of the wall defining the ring (221), and
- a heating element (224) arranged in or on the lid (225).

2. The container and filtration assembly of claim 1, wherein the ring is made of polyethylene polypropylene, polyamide, polycarbonate, polystyrene or glass or ceramic or metal.

3. The container and filtration assembly of claim 1, wherein the heating element is an electrical heating element where heat is generated by an electrical current flowing through a metal wire, mesh, woven or non-woven or a polymeric film having electrically conductive particles incorporated therein.

4. The container and filtration assembly of claim 1, wherein the heating element (224) is a heating mat or pad or film or a micro-wave source.

5. Use of a container and filtration assembly according to claim 1 for whole blood filtration.

6. Use of a container and filtration assembly according to claim 1 for the isolation of circulating rare cells.

## Patentansprüche

1. Behälter und Filtrationsanordnung, umfassend einen Mikroskopieobjektträger (1), eine kreisförmige Filtermembran (2) vom Filmtyp mit einem kreisförmigen Durchmesser in der Region von 25 mm und einer Dicke in der Region von 10 *µ*m und einen Stützkörper (3), wobei
- der Stützkörper (3) in einer Aussparung auf der Frontseite des Trägers (1) angeordnet und/oder gebildet ist,
- die Filtermembran (2) gleichförmig auf dem Stützkörper (3) liegt,
- die Filtrationsanordnung ausgestaltet ist, um über einer oberen Öffnung (14) des Behälters (12) platziert zu werden, so dass der Spalt zwischen dem Objektträger (1) und der Öffnung gegen Luft versiegelt ist, wobei der Behälter (12) ausgestaltet ist, um ein Filtrat zu empfangen, welches die Rückseite des Trägers (1) verlässt, der Behälter (12) ausgestaltet ist, um in einer vorgegebenen Position zu arretieren, nachdem er in einem Gestell eines Pipettenroboters platziert worden ist, wobei das Gestell dem Behälter (12) und somit der über dem Behälter platzierten Filtrationsanordnung ein Gas in vordefinierten, jedoch einstellbaren Druckpegeln bereitstellt, und einem oder mehreren Behältern (12) Stütze bereitstellt, wobei jeder Behälter (12) einen Behälterkörper, einen Boden und einen oberen Bereich (13) umfasst, wobei die obere Öffnung (14) der Größe und Form der Filtermembran/des Stützkörpers (2, 3) des Objektträgers (1) entspricht, der zur Filtration einer Probe über der Öffnung (14) platziert wird, und wobei der obere Bereich (13) eine stabile Stütze für die Filtrationsanordnung bereitstellt und diese in einer fixierten vorgegebenen Position hält,
wobei die Filtrationsanordnung des Weiteren umfasst:
eine Heizvorrichtung, umfassend:
- einen zylindrischen Ring (221), der mit einer seiner Öffnungen konzentrisch über der Filtermembran (2) beziehungsweise über dem Stützkörper (3) der Filtrationsanordnung platziert wird, wobei der Ring eine zylindrische geschlossene Wand mit einer Bodenöffnung und einer oberen Öffnung (223) definiert, wobei die Bodenöffnung in der Größe und Form der Filtermembran (2) und/oder dem Stützkörper (3) entspricht, und
- einen Deckel (225), welcher der Größe und Form der oberen Öffnung (223) des Rings (221) entspricht;
- ein oder mehrere Heizelemente (224) ausgewählt aus
- einem Heizelement (224), das in das Material des Rings (221) integriert ist,
- einem Heizelement (224), das auf der äußeren und/oder inneren Oberfläche der Wand angeordnet ist, die den Ring (221) definiert, und
- einem Heizelement (224), das in oder auf dem Deckel (225) angeordnet ist.

2. Behälter und Filtrationsanordnung nach Anspruch 1, wobei der Ring aus Polyethylen, Polypropylen, Polyamid, Polycarbonat, Polystyrol oder Glas oder Keramik oder Metall gefertigt ist.

3. Behälter und Filtrationsanordnung nach Anspruch 1, wobei das Heizelement ein elektrisches Heizelement ist, bei dem Wärme dadurch erzeugt wird, dass ein elektrischer Strom durch einen Metalldraht, Maschenmaterial, gewebtes oder Vliesmaterial oder einen Polymerfilm mit darin eingearbeiteten, elektrisch leitfähigen Partikeln fließt.

4. Behälter und Filtrationsanordnung nach Anspruch 1, wobei das Heizelement (224) eine Heizmatte oder ein Heizkissen oder ein Heizfilm oder eine Mikrowellenquelle ist.

5. Verwendung eines Behälters und einer Filtrationsanordnung gemäß Anspruch 1 zur Vollblutfiltration.

6. Verwendung eines Behälters und einer Filtrationsanordnung gemäß Anspruch 1 zur Isolierung zirkulierender seltener Zellen.

## Revendications

1. Récipient et ensemble de filtration comprenant un porteur d'objet de microscopie (1), une membrane filtrante de type film (2) circulaire ayant un diamètre circulaire dans la région de 25 mm et une épaisseur dans la région de 10 µm, et un corps de support (3), dans lequel
- ledit corps de support (3) est disposé et/ou formé dans un évidement sur le côté avant du porteur (1),
- ladite membrane filtrante (2) repose uniformément sur le corps de support (3),
- ledit ensemble de filtration est configuré pour être placé sur une ouverture supérieure (14) du récipient (12) de sorte que l'espace entre le porteur d'objet (1) et l'ouverture est étanche à l'air, dans lequel le récipient (12) est configuré pour recevoir un filtrat quittant le côté arrière du porteur (1),
ledit récipient (12) est configuré pour se verrouiller dans une position prédéterminée une fois placé dans un bâti d'un robot de pipetage, dans lequel le bâti fournit un gaz à des niveaux de pression prédéfinis mais réglables au récipient (12) et, ainsi, à l'ensemble de filtration placé sur le récipient, et fournit un support pour un ou plusieurs récipients (12), chaque récipient (12) comprenant un corps de récipient, un fond et un dessus (13), dans lequel l'ouverture supérieure (14) correspond à la taille et à la forme de la membrane filtrante/du corps de support (2, 3) du porteur d'objet (1) qui est placé sur l'ouverture (14) pour la filtration d'un échantillon et dans lequel le dessus (13) fournit un support stable pour l'ensemble de filtration le maintenant dans une position fixe prédéterminée,
dans lequel
l'ensemble de filtration comprend en outre un dispositif de chauffage comprenant :
- un anneau cylindrique (221) qui est placé avec une de ses ouvertures concentriquement sur la membrane filtrante (2) respectivement, le corps de support (3) de l'ensemble de filtration, l'anneau définissant une paroi fermée cylindrique, ayant une ouverture inférieure et une ouverture supérieure (223), dans lequel l'ouverture inférieure correspond à la taille et à la forme de la membrane filtrante (2) et/ou du corps de support (3), et
- un couvercle (225) qui correspond à la taille et à la forme de l'ouverture supérieure (223) de l'anneau (221) ;
- un ou plusieurs éléments chauffants (224) sélectionnés parmi
- un élément chauffant (224) qui est intégré dans le matériau de l'anneau (221),
- un élément chauffant (224) qui est disposé sur la surface extérieure et/ou intérieure de la paroi définissant l'anneau (221), et
- un élément chauffant (224) disposé dans ou sur le couvercle (225).

2. Récipient et ensemble de filtration selon la revendication 1, dans lequel l'anneau est fait de polyéthylène polypropylène, de polyamide, de polycarbonate, de polystyrène ou de verre ou de céramique ou de métal.

3. Récipient et ensemble de filtration selon la revendication 1, dans lequel l'élément chauffant est un élément chauffant électrique où la chaleur est générée par un courant électrique circulant à travers un fil métallique, une maille, un tissé ou un non-tissé ou un film polymère ayant des particules électriquement conductrices incorporées dans celui-ci.

4. Récipient et ensemble de filtration selon la revendication 1, dans lequel l'élément chauffant (224) est un tapis ou un tampon ou un film chauffant ou une source de micro-ondes.

5. Utilisation d'un récipient et d'un ensemble de filtration selon la revendication 1 pour la filtration de sang total.

6. Utilisation d'un récipient et d'un ensemble de filtration selon la revendication 1 pour l'isolement de cellules rares circulantes.
